# EUROPÄISCHE PATENTSCHRIFT

(11) **EP 0 767 426 B1**
(45) Veröffentlichungstag und Bekanntmachung des Hinweises auf die Patenterteilung: **01.01.2014**
(21) Anmeldenummer: 96115740.1
(22) Anmeldetag: 01.10.1996
(51) Int. Cl.: G06F 9/445

(54) **Verfahren zur Programmierung eines Gerätes**
Method for programming an apparatus
Procédé pour la programmation d'un appareil

(30) Priorität: 05.10.1995 DE 19537145
(43) Veröffentlichungstag der Anmeldung: 09.04.1997
(73) Patentinhaber: Gigaset Communications GmbH, 81379 München (DE)
(72) Erfinder: Freitag, Peter, Dipl.-Ing., 80804 München (DE); Raaf, Bernhard, Dipl.-Phys., 81479 München (DE)
(74) Vertreter: Michalski Hüttermann & Partner Patentanwälte

(56) Entgegenhaltungen:
- EP-A- 0 618 531
- WO-A-88/05247
- GB-A- 2 256 734

## Beschreibung

Die Erfindung betrifft ein Verfahren und eine Schaltungsanordnung zur Programmierung eines Gerätes nach dem Oberbegriff des Anspruchs 1 und nach Anspruch 13.

Bei programmgesteuerten Geräten besteht das Problem, daß die Software beispielsweise nach Auslieferung an Kunden in den Geräten geändert werden soll oder muß. Beispielsweise ist die betreffende Software zum Zeitpunkt der Auslieferung an den Kunden fehlerhaft. Andererseits kann herstellerseitig vorgesehen sein, daß bestimmte Leistungsmerkmale der Software erst zu späteren Zeitpunkten freigegeben und damit dem Kunden zur Verfügung gestellt werden sollen. Die entsprechenden Eingriffe in die Geräte können beim Kunden durch Personal des Herstellers vorgenommen werden; alternativ hierzu können die Geräte z.B. zu Fachhändlern transportiert werden, die die entsprechenden Eingriffe vornehmen. Beide Alternativen sind mit dem Nachteil verbunden, daß ein erheblicher personeller Einsatz erforderlich ist. Bei der einen Alternative sind die Geräte auch noch zu transportieren. Ein weiterer Nachteil besteht darin, daß zwischen dem Zeitpunkt, zu dem die Notwendigkeit einer Software-Änderung erkannt wird und dem Zeitpunkt, zu dem diese Änderung erfolgt, ein erheblicher Zeitraum liegen kann. In diesem Zeitraum kann das Gerät nicht nach der geänderten Software betrieben werden.

Es sind Mobil-Telefone (u.a. S3, S4, S3 COM) der Firma Siemens AG bekannt, die mit einem sogenannten Short-Message-Service (SMS) ausgestattet sind. Damit können kurze Nachrichten wie z.B. mit bis zu 160 Zeichen bzw. mit bis zu 140 Bytes übertragen werden.

Aus der EP 0 459 344 A1 ist ein Telekommunikations-Endgerät, wie z.B. ein Funktelefon bekannt, dass seine Betriebs-Software ändern kann, ohne dass der Benutzer des Funktelefons diese Herunterladen muss. Dazu umfasst das Endgerät eine Mehrzahl Speicher zum Speichern unterschiedlicher Betriebs-Software; ein ROM mit einer Download-Software; einen Mikroprozessor, der die Download-Software für eine der Betriebs-Software ausführt; eine klassische Funkschnittstelle, die einerseits als Schnittstelle zum Download und andererseits für klassische Funktelefonverbindungen verwendet wird. Die Betriebs-Software wird geändert, indem zwischen den Speichern umgeschaltet wird. Die Funk-Schnittstelle kann verwendet werden, um eine Betriebs-Software in einen Speicher herunterzuladen, wobei ein Kommunikationskanal aufgebaut wird, um die Betriebs-Software zu übertragen.

Ausgehend von diesem Stand der Technik liegt der Erfindung die Aufgabe zugrunde, ein Verfahren und eine Schaltungsananordnung der eingangs genannten Art anzugeben, welche Software-Änderungen in Geräten in einfacher Weise ermöglichen.

Diese Aufgabe wird erfindungsgemäß durch ein Verfahren und durch eine Schaltungsanordnung gelöst, die in den Patentansprüchen definiert sind.

Die Erfindung ist mit einer Mehrzahl von Vorteilen verbunden. Die Software-Änderungen erfolgen praktisch ohne personellen Einsatz. Die Änderungen können unmittelbar nach dem Zeitpunkt vorgenommen werden, zu dem die geänderte Software vorliegt. Die Geräte sind im Hinblick auf die Software-Änderungen nicht zu transportieren; vielmehr können die Geräte an ihrem Einsatzort bleiben.

Die Erfindung wird nun anhand der Zeichnungen beschrieben. Es zeigt:
- Fig. 1: ein erfindungsgemäßes Gerät und eine Funksende-Einrichtung; und
- Fig. 2: eine Anordnung eines erfindungsgemäßen Geräts mit einer peripheren Einrichtung.

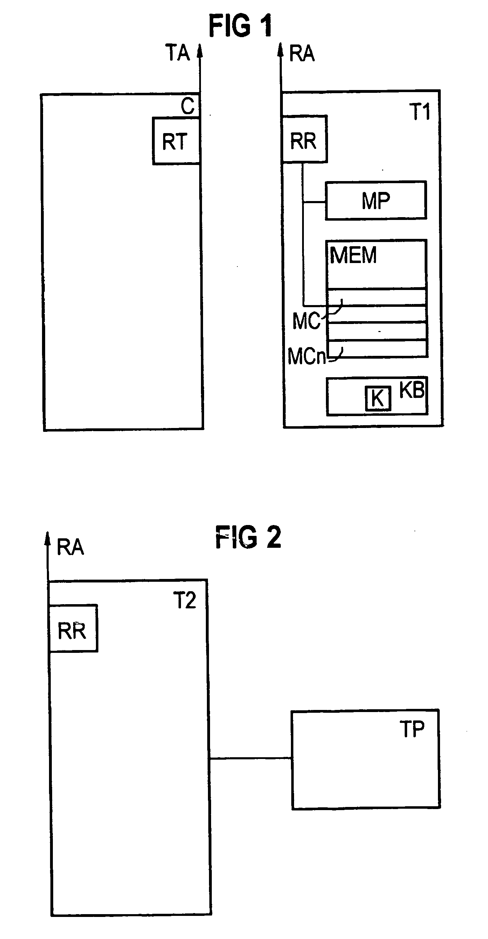

In Fig. 1 ist eine Funksende-Einrichtung C mit einer Antenne TA sowie ein erfindungsgemäßes Gerät T1 mit einer Antenne RA. Das erfindungsgemäße Gerät T1 weist ein Funkempfangsteil RR auf. Dieses Funkempfangsteil empfängt Nachrichten, die von der Funksende-Einrichtung C (Funksendeteil RT) gesendet werden. Die Nachrichten beinhalten Informationen, die in dem Gerät T1 die Software-Änderungen bewirken. Insbesondere wird das im GSM-System bekannte Short-Message-Service (SMS) erfindungsgemäß für die Realisierung der Software-Änderungen eingesetzt.

Die zu dem Gerät T1 übertragenen und von dem Funkempfangsteil RR empfangenen Nachrichten werden in einen Datenspeicher MEM des Geräts eingeschrieben. Die übertragenen Programmdaten sind insbesondere durch Adreßdaten ergänzt, die Adressen von Speicherbereichen MC bzw. von einem Speicherbereich MC des Datenspeichers MEM bezeichnen.

Vor dem Einschreiben der Programmdaten wird der Inhalt der durch die Speicherbereich-Adreßdaten adressierten Speicherbereiche MC geprüft. Insbesondere wird geprüft, ob die Änderung (Update), die durch die übertragenen Programmdaten vorgenommen werden soll, zur vorhandenen Software-Version paßt. Das Einschreiben der übertragbaren Programmdaten in den Datenspeicher MEM erfolgt in Abhängigkeit des Prüfungsergebnisses.

Es kann erfindungsgemäß vorgesehen sein, daß das Einschreiben der Programmdaten erst nach einer manuellen Eingabe eines Bestätigungsbefehls in das Gerät erfolgt. Ein Bestätigungsbefehl ist beispielsweise über eine Taste K in das Gerät eingebbar, die beispielsweise zu einer Tastatur KB gehört.

Die Programmdaten eines vorgegebenen Programmteils können im Rahmen einer Mehrzahl von Übertragungen übertragen werden. Die Programmdaten sind vorzugsweise in einer Maschinensprache bzw. in Assembler codiert, insbesondere wenn im Rahmen einer Übertragung nur vergleichsweise wenige Bytes übertragen werden können.

Der Datenspeicher MEM kann frei programmierbar sein, wobei beliebige Programmteile, d.h. Code-Stücke, beliebig überschrieben werden können.

Der Datenspeicher MEM kann beispielsweise auch ein sogenannter Flash-Speicher oder ein PROM-Speicher sein, d.h. ein Speicher, der nur in einer Richtung (1 auf 0) programmiert werden kann.

In diesem Fall wird der korrigierte Code und eine Zuordnungstabelle in einem freien Bereich des Speichers gespeichert. Ein Befehl in der Nähe des fehlerhaften Codes wird so verändert, daß der Programmfluß zu einer Behandlungsroutine verzweigt. Dies ist beispielsweise durch Programmierung eines ungültigen, d.h. eines nicht definierten Prozessor-Kommandos oder durch Änderung einer Sprungadresse mittels der übertragenen Programmänderungsdaten realisiert, so daß ein Sprung zu dieser Sprungadresse ausgelöst wird, unter welcher die Programmänderungsdaten eingeschrieben worden sind.

Es kann auch vorgesehen sein, daß vom Prozessor jede Programmänderung erkannt wird (z.B. anhand eines ungültigen Kommandos), so daß ausgelöst durch die Erkennung einer Programmänderung eine zentrale bzw. universelle Routine verwendet wird. Im Rahmen dieser Routine werden die zu ändernden Programmdaten durch die übertragenen Programmdaten ersetzt.

Der Datenspeicher MEM des Gerätes kann auch ein einmal programmierbarer Speicher sein, der eine bereichsweise Löschung ermöglicht. Dabei wird weiterhin davon ausgegangen, daß ein Speicherbereich frei ist. In diesem Fall wird ein zu ändernder Dateninhalt eines Speicherbereichs in einen freien Speicherbereich MCn kopiert. Der Inhalt des freien Speicherbereichs wird entsprechend dem Inhalt der zu dem Funkempfangsteil RR übertragenen Programmänderungsdaten geändert.

Der Inhalt des freien Speicherbereichs wird nach Änderung seines Inhalts in den Speicherbereich eingeschrieben, in dem der zu ändernde Inhalt ursprünglich abgespeichert war. Nach dem Einschreiben des geänderten Inhalts in den ursprünglichen Speicherbereich wird der freie Speicherbereich gelöscht.

Der Datenspeicher MEM kann ein nicht programmierbarer ROM-Speicher oder ein im Gerät nicht mehr programmierbares PROM-Flash sein, wobei zusätzliche Schaltungskomponenten vorgesehen sind, die Anschlußleitungen des Prozessors auf eine vorgegebene Kombination von Zustandswerten auf diesen Anschlußleitungen überwachen. Diese Schaltungskomponenten bilden eine sogenannte Break-Logik, die so programmiert ist, daß sie beim Erkennen einer vorgegebenen Kombination von Zustandswerten, welche eine bestimmte Stelle des gerade bearbeiteten Programms bezeichnen, in eine zentrale bzw. universelle Behandlungsroutine verzweigt. Im Rahmen dieser Behandlungsroutine wird auf einen separaten nichtflüchtigen Speicher, beispielsweise einen EEPROM zugegriffen, in welchem die übertragenen Programmänderungsdaten eingeschrieben worden sind.

Der Datenspeicher MEM kann ein nicht programmierbarer ROM-Speicher sein, wobei keine zusätzlichen Schaltungskomponenten wie zuvor beschrieben vorhanden sind (keine Break-Logik). Hierzu ist vorgesehen, daß an vorher festgelegten Stellen im Programm mit Hilfe einer Tabelle (z.B. einer Hash-Table) bestimmt wird, ob eine Unterbrechung vorgenommen werden soll. Diese Tabelle wird durch übertragene Programmänderungsdaten verändert. Damit lassen sich Korrekturen an den vorab festgelegten Stellen vornehmen, wobei auf einen separaten nichtflüchtigen Speicher (z.B. EEPROM) zugegriffen wird, in welchen die übertragenen Programmänderungsdaten eingeschrieben worden sind.

Das erfindungsgemäße Gerät weist ein Steuerwerk MP auf, dem ein Steuerungsprogramm zugeordnet ist, das das erfindungsgemäße Verfahren definiert. Das Steuerwerk ist mit dem Funkempfangsteil RR und dem Datenspeicher MEM verbunden. Dieser enthält gegebenenfalls adressierbare Speicherbereiche MC, ... MCn. Weiterhin weist das Gerät T1 eine Tastatur KB mit Tasten K auf, mit denen Bestätigungsbefehle und sonstige Dateneingaben, beispielsweise auch Programmänderungsdaten generiert werden können.

Das Funkempfangsteil RR und das zu programmierende Gerät T1 bzw. TP können räumlich verbunden oder auch räumlich getrennt sein. Eine solche Anordnung, bei der das Funkempfangsteil RR und das zu programmierende Gerät TP räumlich getrennt sind, ist in Fig. 2 schematisch dargestellt. Gerät T2 (z.B. Basisstation eines Schnurlostelefonsystems) mit dem Funkempfangsteil RR und das zu programmierende Gerät TP (z.B. Schnurlostelefon gegebenenfalls mit angeschlossenem Laptop) können in an sich bekannter Weise drahtgebunden oder drahtlos, z.B. über Infrarot-Schnittstellen, miteinander verbunden sein.

Das Funkempfangsteil RR ist insbesondere in einem tragbaren Fernmeldegerät und insbesondere in einem tragbaren Fernsprechendgerät angeordnet.

## Patentansprüche

1. Verfahren zur Programmierung eines Geräts (T1, TP), wobei ein Funkempfangsteil (RR) vorgesehen ist und wobei Nachrichten von einer Funksende-Einrichtung (C) zu dem Funkempfangsteil (RR) drahtlos mit einem Short-Message-Service übertragen werden können,
**dadurch gekennzeichnet,**
**dass** das Funkempfangsteil (RR) von der Funksende-Einrichtung (C) Nachrichten gemäß dem Short-Message-Service empfängt, die Programmdaten beinhalten, die in dem Gerät (T1, TP) Software-Änderungen bewirken, und
**dass** die Programmdaten in einen Datenspeicher (MEM) des Gerätes (T) eingeschrieben werden.

2. Verfahren nach Anspruch 1,
**dadurch gekennzeichnet,**
**dass** die Programmdaten durch zugehörige Speicherbereich-Adressdaten ergänzt sind.

3. Verfahren nach einem der vorstehenden Ansprüche,
**dadurch gekennzeichnet,**
**dass** vor dem Einschreiben der Programmdaten der Inhalt der durch die Speicherbereich-Adressdaten adressierten Speicherbereiche (MC) geprüft wird, und dass das Einschreiben der Programmdaten in Abhängigkeit des Prüfungsergebnisses erfolgt.

4. Verfahren nach einem der vorstehenden Ansprüche,
**dadurch gekennzeichnet,**
**dass** das Einschreiben nach manueller Eingabe eines Bestätigungsbefehls in das Gerät (T1, TP) erfolgt.

5. Verfahren nach einem der vorstehenden Ansprüche,
**dadurch gekennzeichnet,**
**dass** Programmdaten eines vorgegebenen Programmteils im Rahmen einer Mehrzahl von Übertragungen übertragen werden.

6. Verfahren nach einem der vorstehenden Ansprüche,
**dadurch gekennzeichnet,**
**dass** die Programmdaten in einer Maschinensprache codiert sind.

7. Verfahren nach einem der vorstehenden Ansprüche,
**dadurch gekennzeichnet,**
**dass** mindestens ein Teil des Datenspeichers (MEM), in welchen die Programmdaten eingeschrieben sind, frei programmierbar ist.

8. Verfahren nach einem der Ansprüche 1 bis 7,
**dadurch gekennzeichnet,**
**dass** mindestens ein Teil des Datenspeichers (MEM), in welchen die Programmdaten eingeschrieben sind, nur einmal programmierbar ist.

9. Verfahren nach einem der Ansprüche 1 bis 7,
**dadurch gekennzeichnet,**
**dass** ein zu ändernder Dateninhalt eines Speicherbereichs in einen freien Speicherbereich (MCn) kopiert wird, und
**dass** der Inhalt des freien Speicherbereichs entsprechend dem Inhalt von zu dem Funkempfangsteil (RR) übertragenen Programmänderungsdaten geändert wird.

10. Verfahren nach Anspruch 9,
**dadurch gekennzeichnet,**
**dass** der Inhalt des freien Speicherbereichs nach Änderung seines Inhalts in den Speicherbereich eingeschrieben wird, in dem der zu ändernde Inhalt ursprünglich abgespeichert war.

11. Verfahren nach Anspruch 10,
**dadurch gekennzeichnet,**
**dass** der freie Speicherbereich nach dem Einschreiben des geänderten Inhalts in den ursprünglichen Speicherbereich gelöscht wird.

12. Verfahren nach einem der Ansprüche 1 bis 7,
**dadurch gekennzeichnet,**
**dass** aufgrund der übertragenen Programmdaten und/oder der Speicherbereich-Adressdaten beim Ablauf des Programms ein Sprungbefehl zu einem Speicherbereich aktiviert wird, in welchem übertragene Programmänderungsdaten und/oder durch übertragene Programmänderungsdaten modifizierte Programmdaten abgespeichert sind.

13. Schaltungsanordnung zur Durchführung des Verfahrens nach einem der vorstehenden Ansprüche.

14. Schaltungsanordnung nach Anspruch 13,
**dadurch gekennzeichnet,**
**dass** das Funkempfangsteil (RR) und das zu programmierende Gerät (T1, TP) räumlich getrennt sind.

15. Schaltungsanordnung nach Anspruch 14,
**dadurch gekennzeichnet,**
**dass** das Funkempfangsteil (RR) in einem tragbaren Fernmeldegerät angeordnet ist.

16. Schaltungsanordnung nach Anspruch 14 oder 15,
**dadurch gekennzeichnet,**
**dass** das zu programmierende Gerät (T1, TP) drahtgebunden oder drahtlos mit dem Funkempfangsteil (RR) verbunden ist.

## Claims

1. A method for programming a device (T1, TP), in which a radio receiving part (RR) is provided and messages can be wirelessly transmitted from a radio transmitting unit (C) to the radio receiving part (RR) using a short message service,
**characterized in that**
the radio receiving part (RR) receives messages from the radio transmitting unit (C) in accordance with the short message service which contain program data effecting software changes in the device (T1, TP), and
the program data is written to a data memory (MEM) of the device (T).

2. The method according to claim 1,
**characterized in that**
the program data is supplemented by associated memory area address data.

3. A method according to any one of the preceding claims,
**characterized in that**
the content of the memory areas (MC) addressed by the memory area address data is examined before writing the program data, and the writing of the program data takes place depending on the examination result.

4. A method according to any one of the preceding claims,
**characterized in that**
the writing takes place after manual input of a confirmation command in the device (T1, TP).

5. A method according to any one of the preceding claims,
**characterized in that**
the program data of a predetermined program part is transmitted as part of a plurality of transmissions.

6. A method according to any one of the preceding claims,
**characterized in that**
the program data is encoded in a computer language.

7. A method according to any one of the preceding claims,
**characterized in that**
at least a portion of the data memory (MEM) to which the program data is written can be freely programmed.

8. A method according to any one of claims 1 to 7,
**characterized in that**
at least a portion of the data memory (MEM) to which the program data is written can be programmed only once.

9. A method according to any one of claims 1 to 7,
**characterized in that**
a data content of a memory area which is to be changed is copied to a free memory area (MCN), and
the content of the free memory area is changed in accordance with the content of program change data transmitted to the radio receiving part (RR).

10. The method according to claim 9,
**characterized in that**
after the content of the free memory area was changed, this content is written to the memory area in which the content to be changed was originally stored.

11. The method according to claim 10,
**characterized in that**
the free memory area is deleted after the changed content has been written to the original memory area.

12. A method according to any one of claims 1 to 7,
**characterized in that**
during execution of the program, a branch instruction to a memory area, in which transmitted program change data and/or program data modified by transmitted
program change data is stored, is activated based on the transmitted program data and/or the memory area address data.

13. A circuit assembly for carrying out the method according to any one of the preceding claims.

14. The circuit assembly according to claim 13,
**characterized in that**
the radio receiving part (RR) and the device (T1, TP) to be programmed are spatially separated.

15. The circuit assembly according to claim 14,
**characterized in that**
the radio receiving part (RR) is disposed in a portable telecommunications device.

16. The circuit assembly according to claim 14 or 15,
**characterized in that**
the device (T1, TP) to be programmed is connected to the radio receiving part (RR) by wire or wirelessly.

## Revendications

1. Procédé de programmation d'un appareil (T1, TP), dans lequel il est prévu une partie de réception radio (RR) et dans lequel des messages peuvent être transmis sans fil d'un dispositif d'émission radio (C) à la partie de réception radio (RR) au moyen d'un service de messages courts,
**caractérisé en ce que**
la partie de réception radio (RR) reçoit du dispositif d'émission radio (C) par l'intermédiaire du service de messages courts des messages qui contiennent des données de programme produisant des modifications logicielles dans l'appareil (T1, TP), et
**en ce que** les données de programme sont enregistrées dans une mémoire de données (MEM) de l'appareil (T).

2. Procédé selon la revendication 1, **caractérisé en ce que** les données de programme sont complétées par des données d'adresses de zones de mémoire associées.

3. Procédé selon l'une quelconque des revendications précédentes, **caractérisé en ce qu'**avant d'écrire les données de programme, on teste le contenu des zones de mémoire (MC) adressées par l'intermédiaire des données d'adresses de zones de mémoire et **en ce que** l'écriture des données de programme s'effectue en fonction du résultat du test.

4. Procédé selon l'une quelconque des revendications précédentes, **caractérisé en ce que** l'écriture s'effectue par saisie manuelle d'une instruction de confirmation dans l'appareil (T1, TP).

5. Procédé selon l'une quelconque des revendications précédentes, **caractérisé en ce que** les données de programme d'une partie de programme prédéterminée sont transmises dans le contexte d'une pluralité de transmissions.

6. Procédé selon l'une quelconque des revendications précédentes, **caractérisé en ce que** les données de programme sont codées en langage machine.

7. Procédé selon l'une quelconque des revendications précédentes, **caractérisé en ce qu'**au moins une partie de la mémoire de données (MEM) dans laquelle sont enregistrées les données de programme est programmable librement.

8. Procédé selon l'une quelconque des revendications 1 à 7, **caractérisé en ce qu'**au moins une partie de la mémoire de données (MEM) dans laquelle sont enregistrées des données de programme n'est programmable qu'une seule fois.

9. Procédé selon l'une quelconque des revendications 1 à 7, **caractérisé en ce qu'**un contenu de données à modifier d'une zone de mémoire est copié dans une zone de mémoire libre (MCn) et **en ce que** le contenu de la zone de mémoire libre est modifié en correspondance avec le contenu de données de modification de programme transmises à la partie de réception radio (RR).

10. Procédé selon la revendication 9, **caractérisé en ce que** le contenu de la zone de mémoire libre est écrit, après modification de son contenu, dans la zone de mémoire dans laquelle le contenu à modifier a été initialement stocké.

11. Procédé selon la revendication 10, **caractérisé en ce que** la zone de mémoire libre est effacée après écriture du contenu modifié dans la zone de mémoire initiale.

12. Procédé selon l'une quelconque des revendications 1 à 7, **caractérisé en ce qu'**une instruction de saut vers une zone de mémoire est activée sur la base des données de programme transmises et/ou des données d'adresses de zones de mémoire lors de l'exécution du programme, zone de mémoire dans laquelle sont stockées les données de modification de programme transmises et/ou les données de programme modifiées par les données de modification de programme transmises.

13. Système de circuit destiné à mettre en oeuvre le procédé selon l'une quelconque des revendications précédentes.

14. Système de circuit selon la revendication 13, **caractérisé en ce que** la partie de réception radio (RR) et le dispositif à programmer (T1,TP) sont séparés spatialement.

15. Système de circuit selon la revendication 14, **caractérisé en ce que** la partie de réception radio (RR) est disposée dans un dispositif de communication portable.

16. Système de circuit selon la revendication 14 ou 15, **caractérisé en ce que** l'appareil à programmer (T1, TP) est connecté à la partie de réception radio (RR) par liaison filaire ou sans fil.
